# NEUE EUROPÄISCHE PATENTSCHRIFT

(11) **EP 0 808 805 B2**
(45) Veröffentlichungstag und Bekanntmachung des Hinweises auf die Entscheidung über den Einspruch: **28.12.2005**
(45) Hinweis auf die Patenterteilung: 19.06.2002
(21) Anmeldenummer: 96810328.3
(22) Anmeldetag: 22.05.1996
(51) Int. Cl.: C02F 3/28

(54) **Verfahren und Reaktor zur anaeroben Abwasserreinigung in einem Schlammbett**
Process and reactor for anaerobic purification of waste water in a sludge-bed
Procédé et réacteur pour la purification anaérobie des eaux usées dans un lit de boue

(43) Veröffentlichungstag der Anmeldung: 26.11.1997
(73) Patentinhaber: VA TECH WABAG GmbH, 1211 Wien (AT)
(72) Erfinder: Tippmann, Kurt, 35428 Langgöns (DE)
(74) Vertreter: VA TECH Patente GmbH & Co

(56) Entgegenhaltungen:
- EP-A- 0 012 476
- EP-A- 0 096 825
- EP-A- 0 139 976
- EP-A- 0 170 332
- EP-A- 0 300 348
- EP-A- 0 366 186
- EP-B- 0 323 610
- WO-A-93/22240
- WO-A-96/23735
- DE-A- 3 326 879
- van Haandel, A.C., Lettinga, G.: Anaerobic Sewage Treatment, John Wiley & Sons, 1994, S. 64-69
- Schnellen, P.: Anaerob-aerobe IC-/CIRCOX-Anlage zur Vorbehandlung, Brauereiabwasser Seminar am 26.03.1996 in Hannover, ohne Seitenangabe
- de Zeeuw, W.: Acclimatization of anaerobic Sludge for UASB-reactor Start-up, Dissertationsschrift, 07.09.1984, S. 3-4
- Temper, U. et al.: Stand und Entwicklungspotentiale der anaeroben Abwasserreinigung, Berichte aus Wasserguetewirtschaft und Gesundheitsingenieurwesen Nr. 67, Technische Universitaet Muenchen, 1986, S. 40-41
- van der Meer, R.R., de Vletter, R.: Anaerobic Treatment of Wastewater: the gas-liquid-sludge Separator, Journal WPCF, Vol. 54, Nr. 11, 1982, S. 1482-1483
- Lettinga,G. et al.: Upflow Sludge Blanket Processes, Third International Symposium on Anaerobic Digestion, 14-19, August 1983, S. 139 und 144
- van Lier, J.B.: Thermophilic Anaerobic Wastewater Treatment; Temperature Aspects and Process Stability, 13.09.1995, Dissertationsschrift, S. 30-32
- van Lier, J.B. et al.: 'High Rate' Thermophilic Anaerobic Wastewater Treatment in Compartimentalized Upflow Reactors, Seventh International Symposiumon Anaerobic Digestion, 23-27. Januar 1994, S. 338-347
- Meijer, D.: Kombinierte anaerobe-aerobe Abwasserbehandlung und der Einsatz von Biogas in der Brauerei, Jahrbuch Versuchs- und Lehranstalt fuer Brauereiwesen in Berlin, Berlin, 1995, S. 295-303
- Driessen, W. et al.: New Development in Anaerobic Reactor Design for the Treatment of Industrial Effluents, WISA 96, Biennial Conference and Exhibition of The Water Institute of Southern Africa, Volume I, 20-23 May 1996, ohne Seitenangabe
- Firmenbroschuere Paques: Optimaal Afvalwater behandelen, effectief ruimte besparen, S. 1-8 und Auftragsbeleg vom 16.10.1995 zum Druck

## Beschreibung

Die Erfindung betrifft ein Verfahren zur anaeroben Abwasserreinigung in einem Schlammbett gemäss Oberbegriff von Anspruch 1 sowie einen Reaktor zum Durchführen des Verfahrens.

In einem anaeroben Reinigungsverfahren werden die organischen Verunreinigungen des Abwassers durch Vergären abgebaut, wobei Biogas entsteht. Es koexistieren dabei drei Phasen: 1. Flüssigkeit, nämlich das zu behandelnde Abwasser. 2. Feststoff, nämlich die als Schlamm vorliegende aktive Biomasse, wobei deren Substrat durch die organischen Verunreinigungen gegeben ist. 3. Gas, nämlich das Abbauprodukt Biogas, das ein Gemisch hauptsächlich von Methan und Kohlendioxid ist.

Anaerobe Reinigungsverfahren werden mit Vorteil in Schlammbettreaktoren vom Typ UASB ("upflow anaerobic sludge blanket") durchgeführt. Das Abwasser wird in einem solchen Reaktor im Bodenbereich eines Schlammbetts eingespeist. Ein UASB-Reaktor ist beispielsweise aus der EP 0 244 029 bekannt. Die Erfindung bezieht sich auch auf diesen Reaktortyp.

Die Biomasse eines UASB-Reaktor liegt in der Regel in Form eines Gemisches vor, das sich aus kugeligen Agglomeraten von Mikroorganismen und aus Feinschlamm zusammensetzt, wobei die Durchmesser der Agglomerate rund 1 bis 5 mm betragen. Die Dichte der Biomasse ist grösser als die des Wassers; es kann sich daher durch Sedimentation ein Schlammbett ausbilden. Das durch die Biomasse erzeugte Biogas bildet Blasen, die dank ihres Auftriebs sich im Schlammbett nach oben bewegen. Unter der Einwirkung der Gasblasen kann die Biomasse fluidisiert werden und ein Schwebebett ausbilden. Nicht fluidisiert bildet die Biomasse das Schlammbett, dessen relativer Anteil an Biomasse wesentlich grösser als jener des Schwebebetts ist.

Einem vorgegebenen Angebot an Substrat entspricht eine bestimmte Menge an Biogas, das durch die Biomasse erzeugbar ist. Diesem Angebot an Substrat entsprechend kann die Biomasse nur bis zu einer bestimmten Höhe die Form eines Schlammbetts aufweisen. Oberhalb dieser kritischen Höhe wird die Biomasse durch die Gasblasen fluidisiert, so dass dort ein Schwebebett vorliegt.

UASB-Reaktoren enthalten Dreiphasentrennsysteme, mit denen sich Biogas, behandeltes Abwasser und Biomasse voneinander trennen lassen. Mit dem über dem Schlammbett angeordneten Dreiphasentrennsystem wird einerseits Biomasse im Verfahren zurückgehalten und andererseits behandeltes Wasser und Biogas separat aus dem Verfahren abgezogen. Das Dreiphasentrennsystem umfasst in der Regel eine ein- oder mehrlagige Anordnung von Hauben zum Auffangen und Ableiten des Biogases sowie Ablaufrinnen für das behandelte Wasser. Die Hauben sind derart ausgebildet, dass aufgrund einer strömungsberuhigten Zone ein Gemisch von Wasser und Biomasse sedimentativ trennbar ist. Wird über dem Schlammbett ein genügend grosser Raum vorgesehen, in dem sich ein Schwebebett ausbilden kann, an dessen oberen Grenze praktisch keine Biomasse enthalten ist, so kann auf Hauben verzichtet werden. Das Biogas wird in diesem Fall über dem Wasserspiegel gesammelt und abgeführt.

Dokument EP300348 offenbart einen Biogasreaktor in dem mittels eines oder mehrerer trichterförmiger Trennelemente in deren Reaktorabschnitten ein Gassammelraum zum Sammeln der aus der Gärsuspension aufsteigenden Gase und ein gasblasenarmer Sedimentationsraum gebildet ist, in dem die aktiven Biomasse-Schlammteilchen sedimentieren können. Dokument DE-3326879 offenbart einen Biogasreaktor mit mehreren übereinander angeordneten Doppeltrichtern. Von jedem einzelnen Element geht eine gewisse Rührwirkung (Mammutpumpeneffect) aus, die zu einer sehr gleichmäßigen Versorgung der beteiligten Mikroorganismen führt.

Aufgabe der Erfindung ist es, für grossvolumige Reaktoren Massnahmen zu schaffen, die ein Verfahren mit verbesserter Reinigungskapazität ermöglichen. Das durch den Anspruch 1 definierte Verfahren löst diese Aufgabe. Dank der im kennzeichnenden Teil angegebenen Massnahme, nämlich eine Lage von Gasabscheideelementen innerhalb des Schlammbetts vorzusehen, ist dessen Höhe nicht auf die genannte kritische Höhe beschränkt. Somit ist der Anteil an nicht fluidisierter Biomasse und damit auch die Reinigungskapazität des Reaktors grösser als ohne die erfindungsgemässe Massnahme.

Das erfindungsgemäss Verfahren zum anaeroben Reinigen von Abwasser ist eine Vergärung von organischen Verunreinigungen mittels einer fluidisierbaren, Agglomeraten von Mikroorganismen enthaltende Biomasse. Die Biomasse - in nicht fluidisiertem Zustand - bildet ein Schlammbett, in dessen Bodenbereich das zu behandelnde Abwasser zugeführt wird. Über dem Schlammbett wird mit einem Dreiphasentrennsystem einerseits Biomasse im Verfahren zurückgehalten und andererseits behandeltes Wasser und bei der Vergärung gebildetes Biogas separat aus dem Verfahren abgezogen. Erfindungsgemäss wird mittels innerhalb des Schlammbetts angeordneten Gasabscheideelementen Biogas aus dem Verfahren abgezogen. Alle oder ein Teil der Gasabscheideelemente bilden eine zumindest angenähert horizontale Lage. Diese Lage deckt den Querschnitt des Schlammbetts weitgehend ab. Dabei kann höchstens rund ein Drittel des unterhalb der Lage gebildeten Biogases in den über der Lage liegenden Abschnitt des Schlammbetts aufsteigen.

Die kritische Höhe eines Schlammbetts, das eine bestimmte Menge an aktiver Biomasse enthält, hängt ab von dem Angebot an Substrat, das pro Zeiteinheit in den Reaktor eingespeist wird und von der Biomasse abbaubar ist. Grundsätzlich wäre es möglich, durch Drosselung dieses Angebots die Gaserzeugung zu erniedrigen und damit die kritische Höhe zu vergrössern. Es wäre somit möglich, durch Steuerung der Abwasserzufuhrdafürzu sorgen, dass keine Biomasse unterhalb der Lage der Gasabscheideelemente fluidisiert wird. In der Praxis wird der Reaktor bezüglich einer zu erwartenden Gaserzeugung ausgelegt, und zwar so, dass die Gasabscheideelemente sich ungefähr auf oder etwas über der kritischen Höhe befinden, mit anderen Worten, dass das Schlammbett weitgehend erhalten bleibt, wobei die Biomasse unterhalb der Gasabscheideelemente höchstens im Bereich der Lage durch Gasblasen fluidisiert wird.

Die abhängigen Ansprüche 2 bis 3 betreffen vorteilhafte Ausführungsformen des erfindungsgemässen Verfahrens. Die Ansprüche 4-9 beziehen sich auf einen Schlammbettreaktor, mit dem das Verfahren durchführbar ist.

Nachfolgend wird die Erfindung anhand der Zeichnungen näher erläutert. Es zeigen:
- Fig. 1: einen Ausschnitt aus einem erfindungsgemässen Reaktor,
- Fig. 2a: eine schematische Darstellung eines Vertikalschnitts durch einen bekannten Reaktor,
- Fig. 2b: ein Profil der Schlammdichte des Reaktors gemäss Fig.2a,
- Fig. 3a, 3b: entsprechende Darstellungen wie in Fig. 2a, 2b für einen erfindungsgemässen Reaktor,
- Fig. 4: einen Schnitt durch zwei benachbarte Gasabscheideelemente, wobei die Verteilung der Biomasse und Gasphase schematisch gezeigt ist,
- Fig. 5 bis 7: drei Beispiele von ausschnittsweise dargestellten Lagen von Gasabscheideelementen,
- Fig. 8 bis 11: vier Ausführungsbeispiele der Gasabscheideelemente, als Schnitte quer zu deren Längserstreckung gezeigt,
- Fig. 12: ein weiteres Beispiel einer Lage von Gasabscheideelementen,
- Fig. 13: einen Vertikalschnitt durch einen erfindungsgemässen Reaktor und
- Fig. 14: ein Schrägbild zweier benachbarter Gasabscheideelemente.

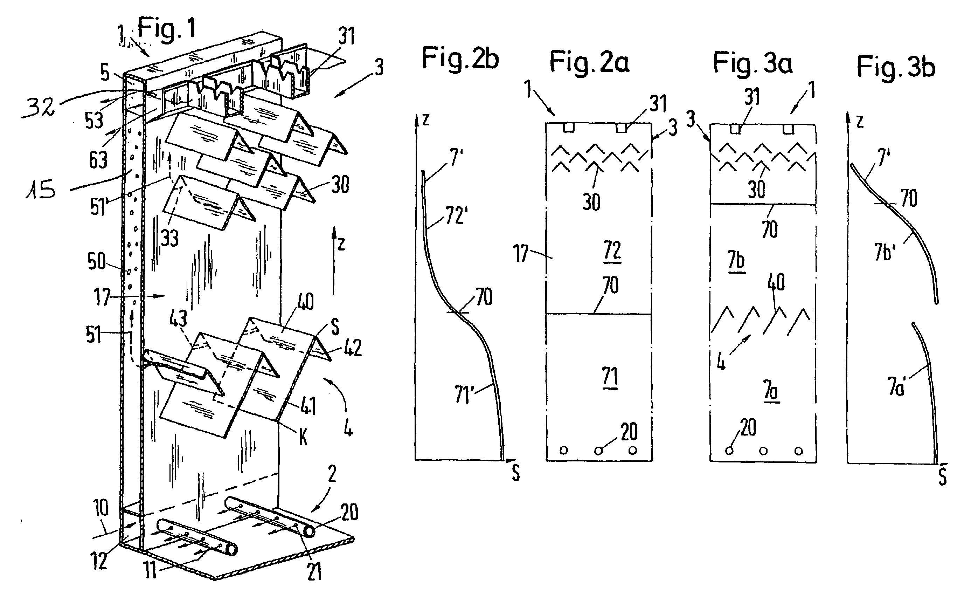

Der Reaktor 1 gemäss Fig.1 umfasst Einspeisesteller, 2 für das Abwasser und ein Dreiphasentrennsystem 3 oberhalb eines Gärraums 17. Das zu behandelnde Abwasser (Pfeile 10, 11) wird über einen Zuführkanal 12, Rohre 20 und Düsen 21 im Bodenbereich des Gärraums 17in ein nicht dargestelltes Schlammbetteingespeist. Innerhalb des Gärraums 17 ist erfindungsgemäss eine Lage 4 mit Gasabscheideelementen 40 in einer Höhe von 1 bis 3 m über dem Reaktorboden angeordnet. Das Dreiphasentrennsystem 3 besteht aus einer dreilagigen Anordnung von Hauben 30 zum Auffangen sowie Ableiten von Biogas und Ablaufrinnen 31 für das behandelte Wasser. Der Pfeil 63 deutet den Abfluss des Wassers durch den Sammelkanal 32 an. Das in den Gasabscheideelementen 40 und den Hauben 30 aufgefangene Biogas 5 gelangt (Pfeile 51, 51') über Öffnungen 43 bzw. 33 in eine Seitenkammer 15, die teilweise wassergefüllt und oben geschlossene ist. Das Biogas 5 (Blasen 50) sammelt sich am oberen Ende der Seitenkammer 15 an und wird von dort aus dem Reaktor abgezogen (Pfeil 53). Die vertikale Richtung ist durch die z-Achse angegeben.

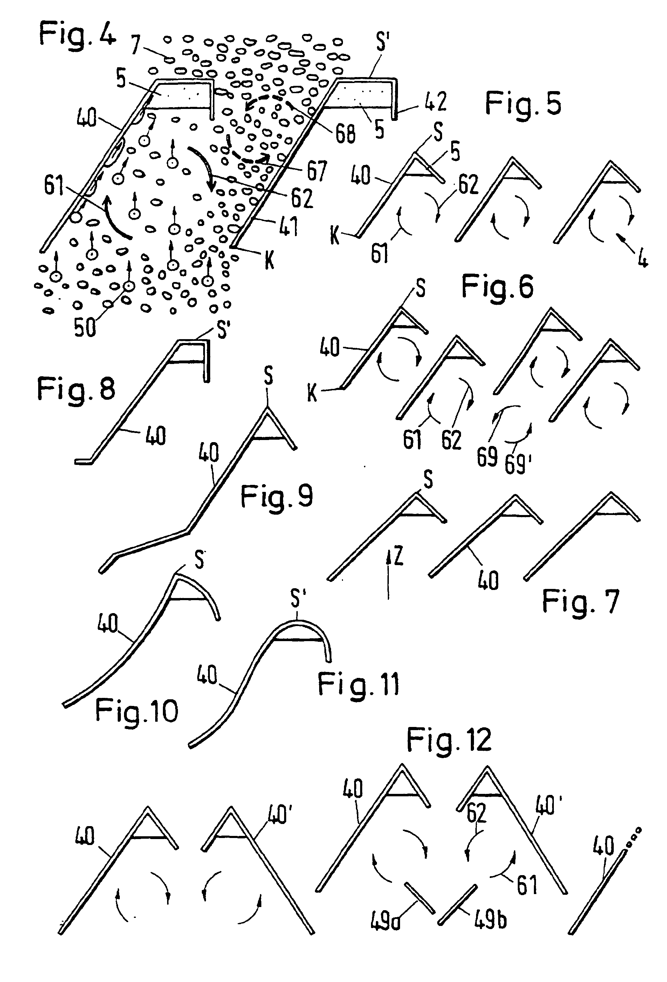

Jedes Gasabscheideelement 40 ist eine langgestreckte Haube, die im Querschnitt gesehen eine lange Flanke 41 und eine kurze Flanke 42 zeigt. Die beiden Flanken 41, 42 sind in einem Scheitelpunkt S miteinanderverbunden. Sie können auch über eine Scheitelzone um einen zentralen Punkt S' miteinander verbunden sein (vgl. Figuren 4, 8 und 11). Die Gerade, die den tiefsten Punkt K der langen Flanke 41 mit dem Scheitelpunkt S bzw. mit dem zentralen Punkt S' der Scheitelzone verbindet, schliesst mit der z-Achse einen Winkel ein, der im Bereich von rund 30 bis 60°, vorzugsweise 35 bis 45° liegt.

Alle Gasabscheideelemente 40 sind gleich ausgebildet und zueinander parallel angeordnet. Benachbarte Gasabscheideelemente 40 sind jeweils in einem gleich grossen Abstand angeordnet. Der Abstand benachbarter Gasabscheideelemente 40 kann etwas kleiner (beispielsweise um 80%), gleich oder auch etwas grösser (beispielsweise um 130%) als die Höhe der Lage 4 der Gasabscheideelemente 40 sein. Die Gasabscheideelemente 40 einer Lage 4 decken den Reaktorquerschnitt vollständig oder zumindest weitgehend ab, so dass die Summe der Flächen von nicht abgedeckten Lücken höchstens 20% der gesamten Querschnittsfläche beträgt.

Die Schlammdichte eines bekannten Reaktors 1, der in Fig.2a schematisch dargestellt ist, weist ein Profil 7' gemäss dem Diagramm der Fig.2b auf. Die sigmoide Kurve 7', die den relativen Anteil der Biomasse, d.h. die Schlammdichte s, in Abhängigkeit von der vertikalen Ortskoordinate z angibt, geht von einem Kurvenstück 71' mit hohen s-Werten zu einem Kurvenstück 72' mit tiefen s-Werten über. Der Übergang - siehe auch Fig. 2a - liegt beim Niveau 70. Unterhalb dieses Niveaus 70 liegt die Biomasse als Schlammbett 71 vor, darüber als Schwebebett 72. Zwischen dem Schlammbett 71 und den untersten Hauben 30 des Dreiphasentrennsystems 3 erstreckt sich ein relativ grosserTeil des Gärraums 17, in dem der Reaktor der geringen Schlammdichte wegen nur wenig zur Behandlung des Abwassers beiträgt.

Die Figuren 3a und 3b zeigen entsprechendes für einen erfindungsgemässen Reaktor 1. Hier setzt sich das Profil 7' wegen der Lage 4 der Gasabscheideelemente 40 aus zwei Kurvenstücken 7a' und 7b' zusammen, die beide relativ grosse s-Werte haben. Da das im Schlammbett 7a gebildete Biogas oder zumindest der grösste Teil dieses Biogases in den Elementen 40 abgefangen wird, werden die tieferen, über der Lage 4 liegenden Regionen des Schlammbettes 7b nicht fluidisiert. Somit verschiebt sich die obere Grenze 70 des gesamten Schlammbettes 7a, 7b nach oben, und daher weist offensichtlich der erfindungsgemässe Reaktor 1 (Fig.3a) gegenüber dem bekannten Reaktor 1 (Fig.2a) eine verbesserte Reinigungskapazität auf.

Fig.4 zeigt einen Schnitt durch zwei benachbarte Gasabscheideelemente 40. Es ist die Verteilung der aus Agglomeraten 7 bestehenden Biomasse und der Gasphase 5 (aufgefangenes Gas und aufsteigende Gasblasen 50) schematisch dargestellt. Die Elemente 40 sind auf einer Höhe angeordnet, auf der das Schlammbett bereits beginnt, in den fluidisierten Zustand überzugehen. Dank der asymmetrischen Form der Gasabscheideelemente 40 bildet sich ein Mammutpumpeneffekt aus. Die Gasblasen 50 werden durch die lange Flanke 41 einseitig umgelenkt. Das mit den Blasen mitgeführte Wasser 6 induziert eine Flüssigkeitswalze, die durch die beiden Pfeile 61 und 62 angedeutet ist. Dank der besonderen Strömungsverhältnisse verbessert sich die Vermischung von Abwasser 6 und Biomasse 7. Gleichzeitig findet aufgrund von Scherkräften eine Abtrennung der Gasblasen 50 von der Biomasse 7 statt.

Unmittelbar über der Flanke 41 befindet sich ein weitgehend gasfreier Bereich, in dem sich die Biomasse durch Sedimentation verdichtet. In dieser Absetzzone kann sich durch die Flüssigkeitswalze 61, 62 eine sekundäre Walze 67, 68 ausbilden, die ebenfalls hinsichtlich der Vermischung von Wasser 6 und Biomasse 7 vorteilhaft ist.

Fig.5 zeigt drei benachbarte Gasabscheideelemente 40, die alle auf der gleichen Höhe angeordnet die Lage 4 bilden. Der horizontale Reaktorquerschnitt wird nicht vollständig abgedeckt: durch Lücken zwischen den Elementen 40 können einzelne Gasblasen die Lage 4 passieren.

Fig.6 zeigt Gasabscheideelemente 40, die eine Lage 4 bilden, in der nicht alle Elemente 40 sich auf dem gleichen Niveau befinden: Jedes zweite Element 40 ist etwas nach oben (oder unten) versetzt. Hier können sich angrenzend an die Flüssigkeitswalzen 61, 62 sekundäre Walzen 69, 69' ausbilden.

Fig.7zeigteineähnlicheAnordnungwieinFig. 5, wobei allerdings - in der Projektion in z-Richtung gesehen - die benachbarten Elemente 40 sich überlappen.

Bezüglich der Querschnitte der Gasabscheideelemente 40 ist eine grosse Formenvielfalt denkbar. Einzelne Beispiele sind in den Figuren 8 bis 11 dargestellt.

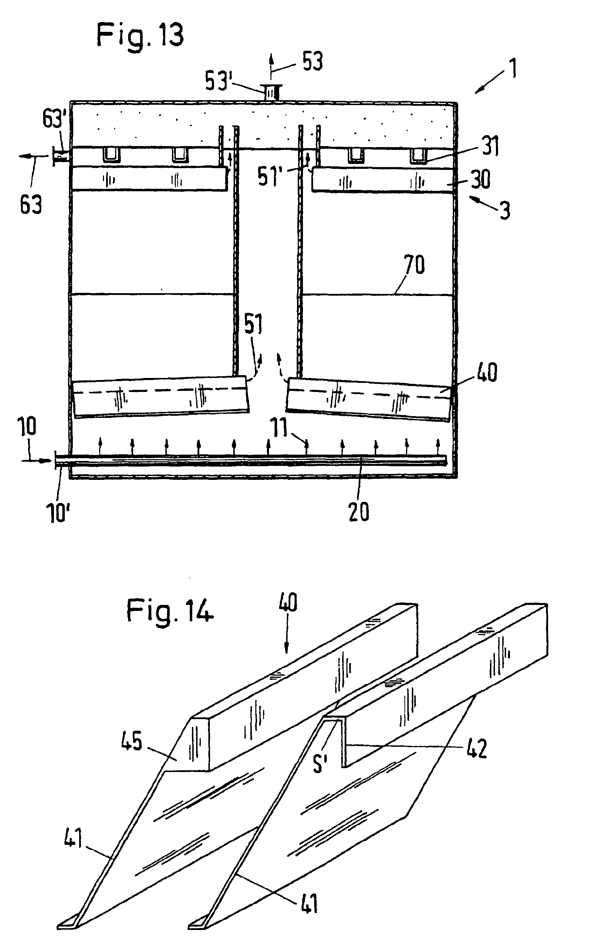

Fig.12 illustriert, dass beispielsweise auch Lagen 4 möglich sind, bei denen benachbarte Gasabscheideelemente 40 und 40' jeweils paarweise spiegelbildlich angeordnet sind, wobei zusätzlich auch Versetzungen in z-Richtung ähnlich wie in Fig.6 vorgesehen sein können. Mit Platten 49a, 49b kann eine Ausbildung von Flüssigkeitswalzen 61, 62 unterstützt werden.

Bei der Abwasserbehandlung nimmt die Menge an Biomasse zu. Da im Reaktor 1 zwischen den Gasabscheideelementen 40 Biomasse absinkt, kann ein Überschuss im Bodenbereich des Schlammbetts aus dem Verfahren abgezogen wird.

Der Reaktor 1 der Fig. 1 3 weist einen Zulauf 10' für das zu behandelnde Abwasser 10, einen Ablauf 63' für das behandelte Wasser 63 und einen Entnahmestutzen 53' für das erzeugte Biogas 53 auf. In diesem Reaktor 1 ist eine relativ tiefe Lage der oberen Grenze 70 des Schlammbetts vorgesehen. Es wird daher im Dreiphasentrennsystem 3 nur eine Lage von Hauben 30 benötigt. Es lässt sich auch ein Abscheidesystem ausserhalb des Reaktors vorsehen, so dass auf Hauben 30 eines Dreiphasentrennsystems 3 ganz verzichtet werden kann.

Um die Reinigungskapazität des Reaktors 1 der Fig.13 zu verbessern, kann auf dem Niveau 70 eine zweite Lage von Gasabscheideelementen 40 angeordnet werden. In diesem Fall müsste im Dreiphasentrennsystem 3 durch mehrlagig angeordnete Hauben 30 das Rückhaltevermögen bezüglich der Biomasse verbessert werden, damit über die Überlaufrinnen 31 möglichst keine Biomasse aus dem Reaktor 1 ausgeschwemmt wird.

Fig.14 zeigt als Schrägbild zwei benachbarte Gasabscheideelemente 40, die einen Querschnitt aufweisen, der bereits in Fig.8 dargestellt worden ist. Die Elemente 40 können leicht geneigt sein, siehe Fig.13, so dass der Transport 51 des Biogases erleichtert wird. An dem Ende des Elements 40, an dem kein Gas abgeführt werden soll, wird mit Vorteil eine Abschlussplatte 45 vorgesehen.

Wie bereits gesagt ist im Gärraum 1 bis 3 m über dem Reaktorboden eine Lage 4 mit Gasabscheideelementen 40 angeordnet. Zwischen dieser Lage 4 oder - bei Vorliegen von mehr als einer Lage 4 von Gasabscheideelementen 40 - zwischen der obersten Lage 4 und einem Wasserüberlauf 31 des Dreiphasentrennsystem ist ein Abstand von mindestens 50 cm vorgesehen.

## Patentansprüche

1. Verfahren zum anaeroben Reinigen von Abwasser durch Vergärung von organischen Verunreinigungen mittels einer fluidisierbaren, Agglomerate (7) von Mikroorganismen enthaltende Biomasse, wobei durch die Biomasse - in nicht fluidisiertem Zustand - ein Schlammbett gebildet wird, in dessen Bodenbereich das zu behandelnde Abwasser (11) zugeführt wird, und über dem Schlammbett mit einem Dreiphasentrennsystem (3) einerseits Biomasse im Verfahren zurückgehalten und andererseits behandeltes Wasser (63) und bei der Vergärung gebildetes Biogas (5) separat aus dem Verfahren abgezogen wird, wobei mittels innerhalb des Schlammbetts angeordneter Gasabscheideelemente (40) Biogas aus dem Verfahren abgezogen wird und alle oder ein Teil der Gasabscheideelemente eine zumindest angenähert horizontale Lage (4) bilden, so dass durch diese Lage der Querschnitt des Schlammbetts so abgedeckt ist, dass die Summe der Flächen von nicht abgedeckten Lücken höchstens 20% der gesamten Querschnittsfläche beträgt, **dadurch gekennzeichnet, dass** mehrere Gasabscheideelemente einer Lage langgestreckte, in Ihrer Längserstreckung gerade, asymmetrische Hauben mit verschieden langen Flanken (41, 42) sind, unterhalb derer durch aufsteigende Gasblasen (50) ein Strömungszustand ausgebildet wird, der horizontal ausgerichtete Flüssigkeitswalzen (61, 62) umfasst, wobei jedem Gasabscheideelement jeweils mindestens eine dieser Flüssigkeitswalzen zugeordnet ist.

2. Verfahren nach Anspruch 1, **dadurch gekennzeichnet, dass** die Gasabscheideelemente (40) in einem Reaktor bezüglich einer zu erwartenden Gaserzeugung derart angeordnet sind, dass das Schlammbett weitgehend erhalten bleibt und unterhalb der oder jeder Lage (4) von Gasabscheideelementen (40) die Biomasse (7) durch gebildete Gasblasen (50) höchstens im Bereich der Lage fluidisiert wird.

3. Verfahren nach Anspruch 1 oder 2, **dadurch gekennzeichnet, dass** durch Zwischenräume der Gasabscheideelemente (40) Biomasse (7) absinken kann und dass ein bei der Abwasserbehandlung entstehender Überschuss an Biomasse unterhalb der Gasabscheideelemente aus dem Verfahren abgezogen wird.

4. Schlammbettreaktor (1) zum Durchführen des Verfahrens nach einem der Ansprüche 1 bis 3, mit einem Gärraum (17), mit im Bodenbereich angeordneten Einspeisestellen (2) für das Abwasser (10) und mit einem Dreiphasentrennsystem (3) für Gas (5), Wasser (6) und Biomasse (7),
**dadurch gekennzeichnet, dass** im Gärraum 1 bis 3 m über dem Reaktorboden eine Lage (4) mit Gasabscheideelementen (40) angeordnet ist, so dass durch diese Lage der Querschnitt des Schlammbetts so abgedeckt ist, dass die Summe der Flächen von nicht abgedeckten Lücken höchstens 20% der gesamten Querschnittsfläche beträgt, und dass zwischen dieser Lage oder - bei Vorliegen von mehr als einer Lage von Gasabscheideelementen - zwischen der obersten Lage und einem Wasserüberlauf (31) des Dreiphasentrennsystem ein Abstand von mindestens 50 cm vorgesehen ist und dass mehrere Gasabscheideelementeeiner Lage langgestreckte, in Ihrer Längserstreckung gerade, asymmetrische Hauben sind, die im Querschnitt gesehen eine lange (41) sowie eine kurze Flanke (42) zeigen, wobei die beiden Flanken in einem Scheitelpunkt (S) oder über eine Scheitelzone miteinander verbunden sind.

5. Reaktor nach Anspruch 4, **dadurch gekennzeichnet, dass** die Gerade, die den tiefsten Punkt (K) der langen Flanke (41) mit dem Scheitelpunkt (S) bzw. mit einem zentralen Punkt (S') der Scheitelzone verbindet, bezüglich der vertikalen Richtung (z) einen Winkel einschliesst, der im Bereich von rund 20 bis 50°, vorzugsweise 25 bis 35° liegt.

6. Reaktor nach einem der Ansprüche 4 oder 5, **dadurch gekennzeichnet, dass** alle Gasabscheideelemente (40) gleich ausgebildet und zueinander parallel angeordnet sind.

7. Reaktor nach Anspruch 6, **dadurch gekennzeichnet, dass** benachbarte Gasabscheideelemente (40) jeweils in einem gleich grossen Abstand angeordnet sind.

8. Reaktor nach Anspruch 7, **dadurch gekennzeichnet, dass** der Abstand benachbarter Gasabscheideelemente (40) bis auf einen Faktor von rund 0,8 bis 1,3 gleich der Höhe der Lage der Gasabscheideelemente ist.

9. Reaktor nach einem der Ansprüche 4 bis 8, **dadurch gekennzeichnet, dass** das Dreiphasentrennsystem (3) eine ein- oder mehrlagige Anordnung von Hauben (30) zum Auffangen und Ableiten des Biogases (5) und Ablaufrinnen für das behandelte Wasser (6) umfasst, wobei die Hauben derart ausgebildet sind, dass aufgrund einer strömungsberuhigten Zone ein Gemisch von Wasser und Biomasse (7) sedimentativ trennbar ist.

## Claims

1. Method for the anaerobic purification of sewage or waste water through fermentation of organic impurities by means of a fluidisable biomass containing agglomerates (7) of micro-organisms, wherein a sludge blanket is formed by the biomass - in a non-fluidised state - with the sewage water (11) to be treated being supplied into the base region of the sludge blanket, and wherein above the sludge blanket, on the one hand, biomass is held back within the process and, on the other hand, the treated water (63) and the biogas (5) formed by the fermentation are separately drawn off from the process with a tree-phase-separation system (3), whereas biogas is drawn off from the process by means of gas segregation elements (40) arranged within the sludge blanket and whereas all or a portion of the gas segregation elements form an at least approximately horozontal tier (4), with the cross-section of the sludge blanket being largely covered over by this tier so that the sum of the areas of non-covered gaps amounts to at most 20% of the entire cross-sectional area, **characterised in that** a number of gas segregation elements of one tier are elongate asymmetric in longitudinal direction straight hoods having flanks (41, 42) of different length whereas beneath the hoods through rising gas bubbles a state of flow develops which comprises horizontally oriented liquid vortices or rollers (61, 62), with each gas segregation element being associated in each case with at least one of these liquid vortices.

2. Method in accordance with claim 1 **characterised in that** the gas segregation elements (40) are arranged in a reactor with respect to an anticipated gas production in such a manner that the sludge blanket remains largely intact and beneath the or each tier (4) of gas segregation elements (40) the biomass (7) is at most fluidised in the region of the tier through the gas bubbles that form.

3. Method in accordance with claim 1 or 2 **characterised in that** biomass (7) can sink downwards through intermediate spaces of the gas segregation elements (40); and **in that** surplus of biomass arising in the treatment of sewage water is drawn off from the process beneath the segregation elements.

4. Sludge blanket reactor (1) for carrying out the method in accordance with one of the claims 1 to 3, comprising a fermentation chamber (17), supply points (2) for the sewage water (10) arranged in the region of the base and a three-phase separation system (3) for gas (5), water (6) and biomass (7), **characterised in that** a tier (4) with gas segregation elements (40) is arranged 1 to 3 m above the base of the reactor, so that the cross-section of the sludge blanket is covered over by this tier so that the sum of the areas of non-covered gaps amounts to at most 20% of the entire cross-sectional area; and **in that** a spacing of at least 50 cm is provided between this tier or - in the presence of more than one tier of gas segregation elements - between the uppermost tier and a water overflow (31) of the three phase separation system; and **in that** a number of gas segregation elements (40) of one tier are elongate asymmetric in longitudinal direction straight hoods which, when seen in cross-section, display a long flank (41) as well as a short flank (42), with the two flanks being connected to one another at an apex point (S) or via an apex zone.

5. Reactor in accordance with claim 4 **characterised in that** the straight line that connects the lowest point (K) of the long flank (41) to the apex point (S) or to a central point (S') of the apex zone respectively subtends an angle with respect to the vertical direction (z) which lies in the range of about 20 to 50°, preferably 25 to 35°.

6. Reactor in accordance with claim 4 or 5 **characterised in that** all the gas segregation elements (40) are constructed similarly and are arranged parallel to one another.

7. Reactor in accordance with claim 6 **characterised in that** adjacent gas segregation elements (40) are in each case arranged with equal spacing.

8. Reactor in accordance with claim 7 **characterised in that** the spacing of adjacent gas segregation elements (40) is equal to the height of the tier of gas segregation elements to within a factor of about 0.8 to 1.3.

9. Reactor in accordance with one of the claims 4 to 8 **characterised in that** the three-phase separation system (3) comprises a singly or multiply tiered arrangement of hoods (30) for capturing and conveying off the biogas (5) and flow-off channels for the treated water (6), with the hoods being executed in such a manner that a mixture of water and biomass (7) can be separated by sedimentation as a result of a flow-calmed zone.

## Revendications

1. Procédé d'épuration anaérobie d'eaux usées par fermentation d'impuretés organiques au moyen d'un agglomérat (7) fluidisable de biomasse comprenant des micro-organismes, où, au moyen de la biomasse - à l'état non fluidisé - est formé un lit de boue, dans la zone de fond de laquelle sont amenées les eaux usées (11) à traiter et, par l'intermédiaire du lit de boue, à l'aide d'un système de séparation en trois phases (3), d'une part, la biomasse est retenue dans le processus et, d'autre part, l'eau traitée (63) et du biogaz (5), formé lors de la fermentation, sont extraits séparément du processus, sachant que le biogaz est extrait du processus, au moyen d'éléments séparateurs de gaz (40) disposés à l'intérieur du lit de boue, et tous ou une partie des éléments séparateurs de gaz forment une couche (4) horizontale, de sorte que, au moyen de cette couche, la section transversale du lit de boue est couverte de manière que la somme des aires des vides non recouverts fasse au maximum 20% de l'ensemble de l'aire de la section transversale,
**caractérisé en ce que** plusieurs éléments séparateurs de gaz d'une couche sont des hottes asymétriques, allongées et rectilignes en direction longitudinale, ayant des flancs (41, 42) de différentes longueurs, au-dessous desquelles, suite à la montée des bulles de gaz (50), est formé un état d'écoulement qui comprend des rouleaux de liquide (61, 62) orientés horizontalement, à chaque élément séparateur de gaz étant associé au moins l'un de ces rouleaux de liquide.

2. Procédé selon la revendication 1, **caractérisé en ce que**, en référence à une génération de gaz attendue, les éléments séparateurs de gaz (40) sont disposés dans un réacteur, d'une manière telle que le lit de boue reste largement conservé et que, au-dessous de la ou de chaque couche (4) d'éléments séparateurs de gaz (40), la biomasse (7) soit exposée à une fluidisation maximale dans la zone de la couche, par les bulles de gaz (50) formées.

3. Procédé selon la revendication 1 ou 2, **caractérisé en ce que** la biomasse (4) peut descendre en passant par des espaces intermédiaires des éléments séparateurs de gaz (50), et **en ce qu'**un excès de biomasse, constitué lors du traitement des eaux usées, est extrait du processus au-dessous des éléments séparateurs de gaz.

4. Réacteur à lit de boue (1) pour la mise en oeuvre du procédé selon l'une des revendications 1 à 3, avec une enceinte de fermentation (17), avec des points d'injection (2) disposés dans la zone du fond, pour des eaux usées (10), et avec un système séparateur en trois phases (3) pour le gaz (5), l'eau (6) et la biomasse (7),
**caractérisé en ce qu'**une couche (4) comportant des éléments séparateurs de gaz (40) est disposée dans l'enceinte de fermentation, à une hauteur de 1 à 3 m au-dessus du fond de réacteur, de façon à ce que cette couche couvre la section du lit de boue de manière à ce que la somme des surfaces des ouvertures non-couvertes s'élève au maximum à 20% de la surface de section totale, et **en ce que**, entre cette couche ou - en cas de présence de plus d'une couche d'éléments séparateurs de gaz - entre la couche la plus haute et un déversoir d'eau (31) du système de séparation en trois phases, est prévu un espacement minimum de 50 cm, et **en ce que** plusieurs éléments séparateurs de gaz d'une couche sont des hottes allongées et rectilignes en direction longitudinale, asymétriques, ayant, observées en coupe, un flanc long (41) ainsi qu'un flanc court (42), les deux flancs étant reliés ensemble dans une zone de sommet (S) ou au-dessus d'une zone de sommet.

5. Réacteur selon la revendication 4, **caractérisé en ce que** la droite, reliant le point (K) du flanc long (41) au point sommet (S) ou à un point central (S') de la zone de sommet fait, par rapport à la direction (z), un angle situé dans la plage de juste 20 à 50°, de préférence de 25 à 35°.

6. Réacteur selon la revendication 4 ou 5, **caractérisé en ce que** tous les éléments séparateurs de gaz (50) sont de même configuration et sont disposés parallèlement entre eux.

7. Réacteur selon la revendication 6, **caractérisé en ce que** des éléments séparateurs de gaz (40) voisins sont chacun disposés sous un espacement de valeur identique.

8. Réacteur selon la revendication 7, **caractérisé en ce que** l'espacement entre éléments séparateurs de gaz (40) voisins est égal, jusqu'à un facteur de 0,8 à 1,3, à la hauteur de la couche des éléments séparateurs de gaz.

9. Réacteur selon l'une des revendications 4 à 8, **caractérisé en ce que** le système de séparation en trois phases (3) comprend un agencement à une ou plusieurs couches de hottes (30), pour le captage et la dérivation du biogaz (5), et des goulottes d'évacuation pour l'eau traitée (6), les hottes étant configurées de manière qu'un mélange d'eau et de biomasse (7) puisse être séparé par voie sédimentative, du fait d'une zone dans laquelle l'écoulement est tranquillisé.
